# EUROPEAN PATENT SPECIFICATION

(11) **EP 4 264 088 B1**
(45) Date of publication and mention of the grant of the patent: **30.07.2025**
(21) Application number: 21840137.0
(22) Date of filing: 16.12.2021
(51) Int. Cl.: F16H 61/00, F01M 1/10, F01M 5/00, F16K 11/07, F16K 31/00

(54) **VALVE GROUP**
VENTILGRUPPE
GROUPE VANNE

(30) Priority: 21.12.2020 IT 202000031661
(43) Date of publication of application: 25.10.2023
(73) Proprietor: Ufi Filters s.p.a., 46047 Porto Mantovano (Mantova) (IT)
(72) Inventor: GIRONDI, Giorgio, 46047 Porto Mantovano, Mantova (IT)
(74) Representative: Gamba, Alessandro
(86) International application number: PCT/IB2021/061829
(87) International publication number: WO 2022/137037

(56) References cited:
- WO-A1-2017/175172
- WO-A1-2018/154471
- JP-A- 2000 205 435
- US-A- 4 440 191
- US-A1- 2008 000 534

## Description

### Field of application

The present invention relates to a valve group for a pressurized oil circuit of a vehicle. Furthermore, the present invention relates to an oil management assembly of a vehicle, forming part of the pressurized oil circuit, comprising said valve group.

### Background art

It is well known that there is a multiplicity of fluid circuits in a vehicle in which predefined amounts of oil flow. Such circuits have the purpose of putting a plurality of distinct components or operating groups included in a vehicle in fluid communication. For example, the engine group or the transmission group are typically served by oil for adjusting the temperature thereof and/or the lubrication of the respective moving components.

The oil in the vehicle is subjected to a pumping or suction action which puts it into circulation, while being subjected to other specific operations, for example varying the temperature thereof or cleaning and filtration. Such operations are performed by specific operating groups with specific features.

Specific oil management assemblies are also known which are suitable for comprising one or more of the aforesaid operating groups by placing them in fluid communication with one another or by placing them in fluid communication with other vehicle operating groups, such as for example the engine group or the transmission group.

In fact, such oil management assemblies are typically operatively connected to fundamental and specific vehicle components or operating groups for which the features of the oil are of substantial importance: for example, to the engine group, or to the gearbox group (automatic type), or to the transmission group.

Therefore, as a function of the type of operating groups included, the oil management assemblies are suitable for managing the features of the oil, for example by varying the temperature or by performing specific filtration operations. Therefore, effectively managing the oil and the features thereof is extremely important for the correct and effective operation of the vehicle itself and of the fundamental vehicle operating groups served by the pressurized oil circuit.

In the state of the art, solutions of valve groups and oil management assemblies are well known in which different situations and different operating conditions of the oil and the management thereof have been addressed, for example the correct management of the temperature thereof and/or the filtration and cleaning thereof.

However, in the known embodiments, the respective valve groups fail to be safe and effective as the viscosity of the oil varies. In other words, it has been observed that some embodiments of valve groups incur breakage and/or malfunctions due to situations in which the oil has a high viscosity. Examples of said prior art solutions are disclosed in documents WO2018/154471 and WO2017/175172. In particular, said WO2018/154471 discloses a valve group housable in a conduit of a pressurized oil circuit, wherein said conduit is in fluid communication with a vehicle operating group and with a heat exchanger group, wherein said conduit extends along a conduit axis comprising conduit side walls and a first conduit opening and a second conduit opening positioned axially spaced apart on the conduit side walls fluidly connected to the operating group and the heat exchanger group, respectively; wherein the valve group extends in length along an axis coinciding with the conduit axis and comprises: a valve body; a shutter extending along the axis, comprising a shutter body fitted, axially movable, onto the valve body, so as to be, in a configuration of the valve group housed in the conduit, radially positioned between the valve body and the conduit side walls; a control device engaged with the valve body and the shutter to control the position of the shutter along the axis between an obstruction position and an open position.

### Solution of the invention

The need is therefore strongly felt to provide a valve group which solves the aforesaid technical problem.

It is the object of the present invention to provide a valve group suitable for being highly stable and ensure high resistance even in the presence of high viscosity oil, obviously without affecting the correct management of the oil flow.

Such an object is achieved by the valve group claimed in claim 1, and by an oil management assembly comprising the valve group in accordance with claim 17. The claims dependent on the aforesaid claims show preferred variants implying further advantageous aspects.

### Description of the drawings

Further features and advantages of the invention will become apparent from the description provided below of preferred exemplary embodiments thereof, given by way of non-limiting example, with reference to the accompanying drawings, in which:

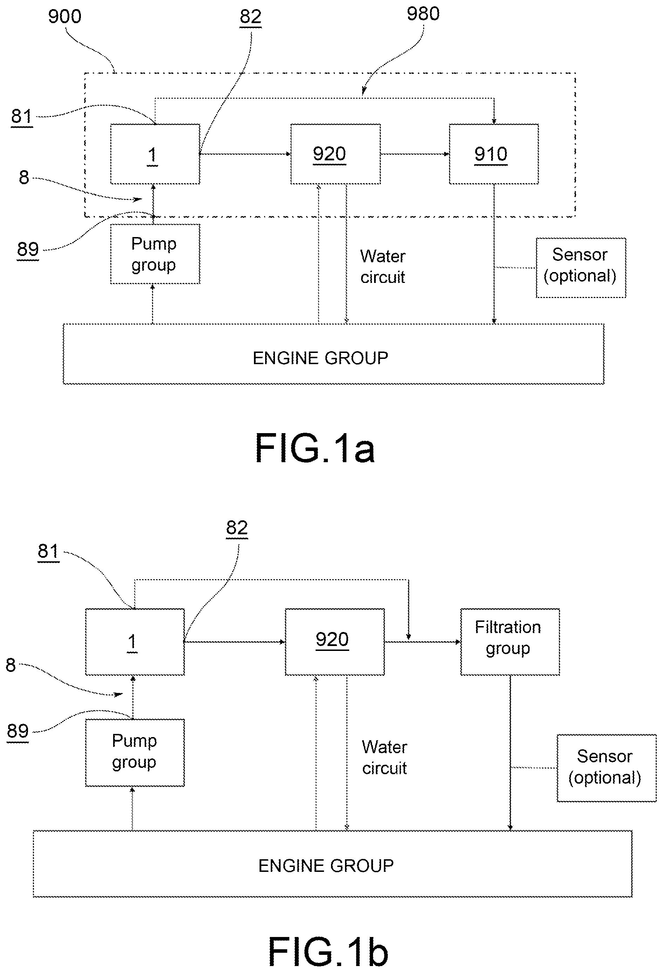

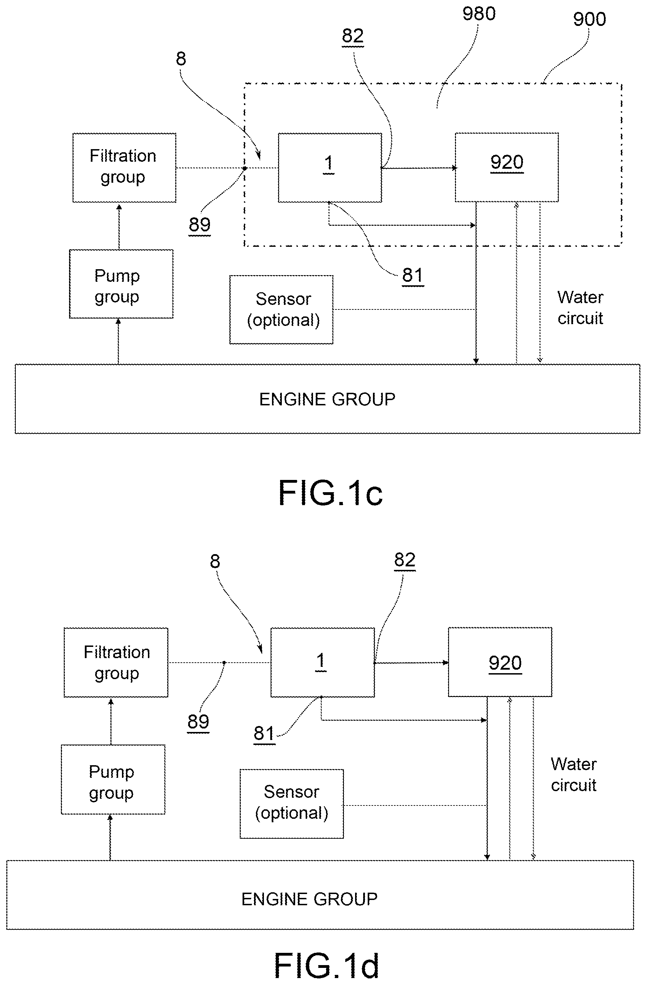

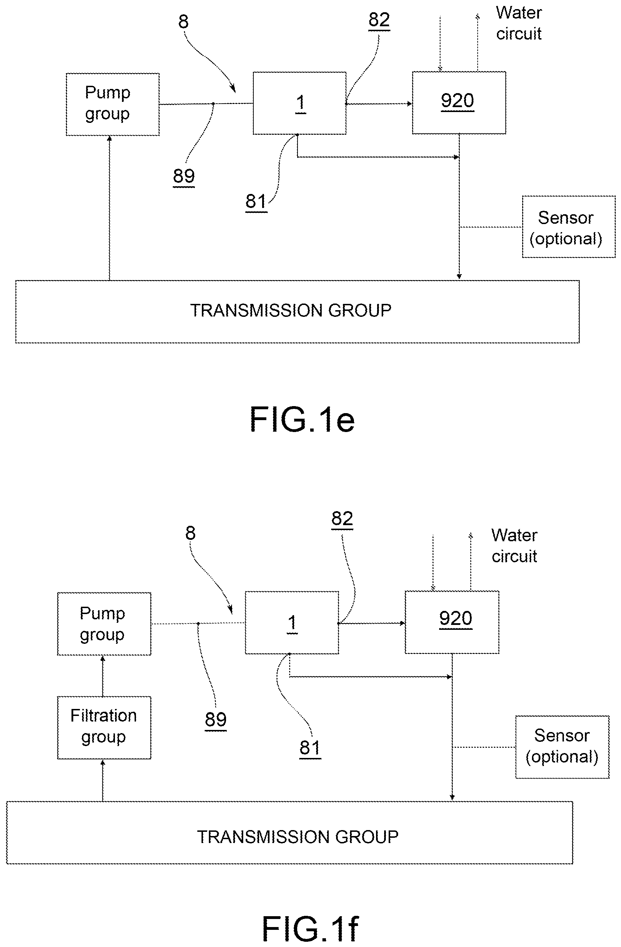

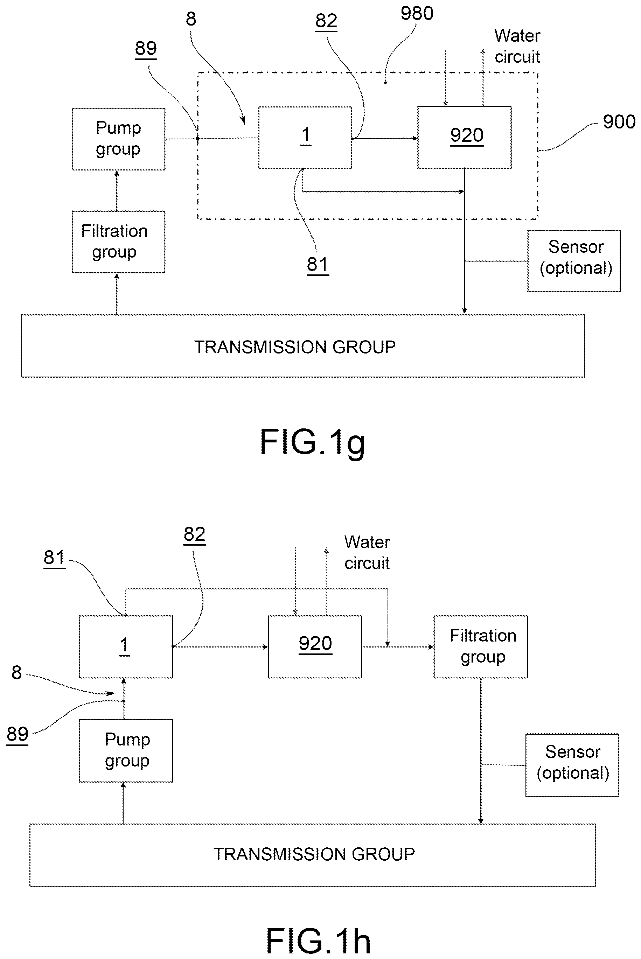

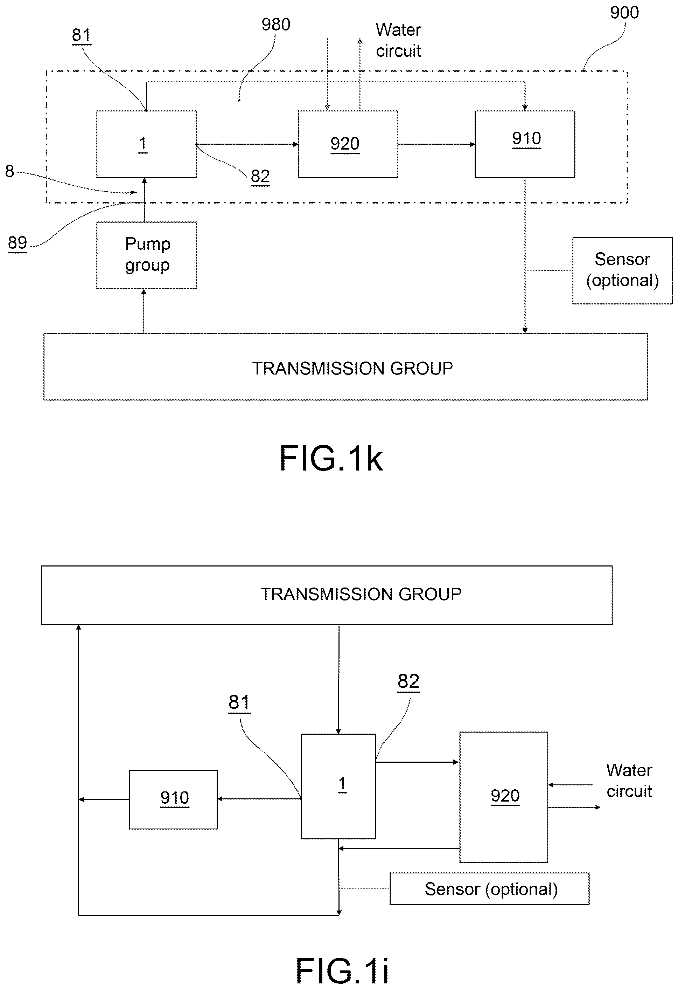

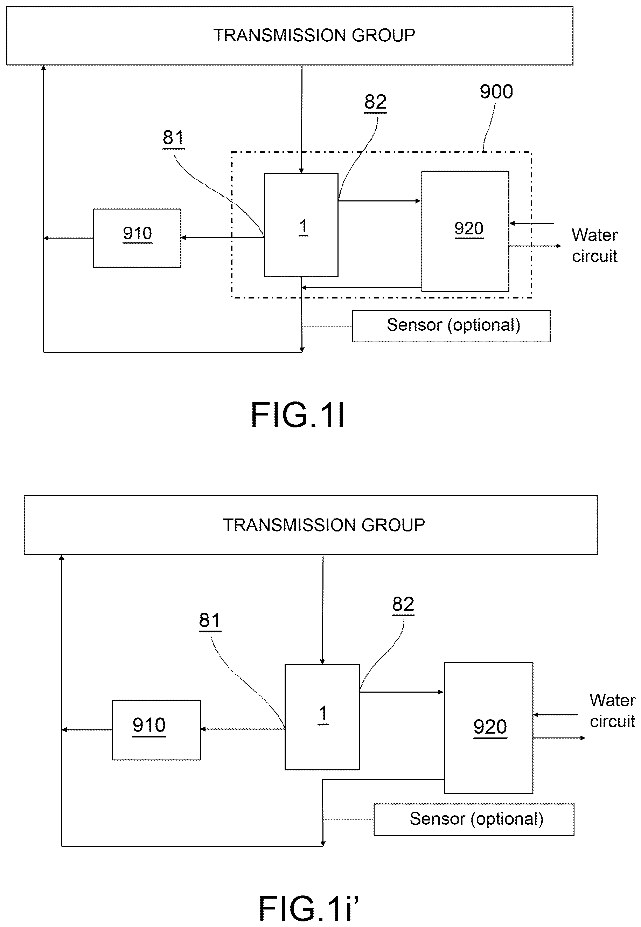

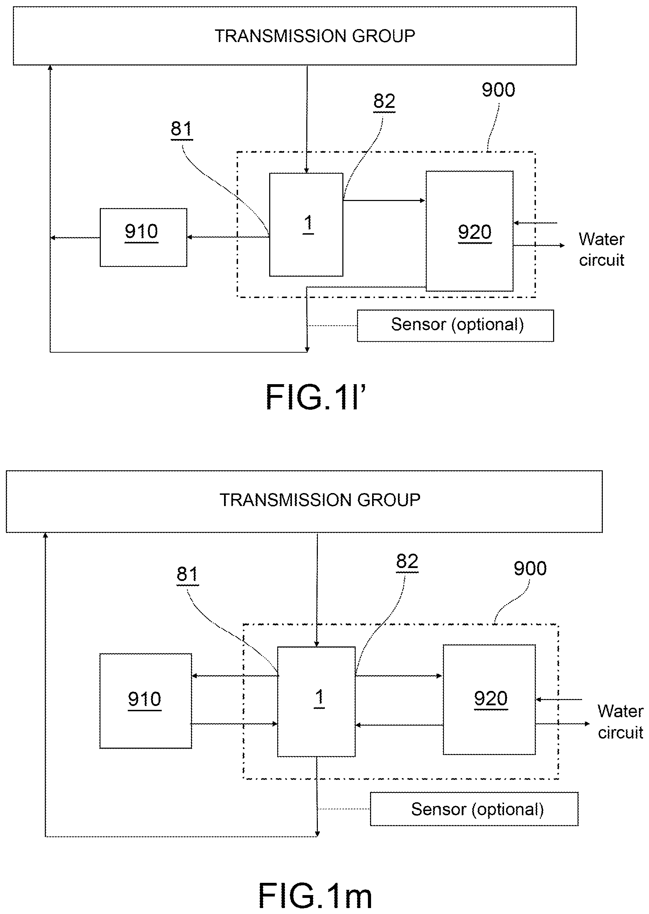

- figures 1a, 1b, 1c, 1d, 1e, 1f, 1g, 1h, 1k, 1i, 1i', 1l, 1l' and 1m diagrammatically show different specific embodiments of an oil circuit comprising a valve group according to the present invention;
- figure 2 shows a view with separate parts of a valve group according to the present invention, according to a first embodiment;
- figure 3 shows the valve group in figure 2 in an assembled view;
- figures 4a and 4b show a sectional view of the valve group in figure 3, housed in a conduit, in which the shutter is positioned in a base position and in an adjustment position;
- figure 5 shows a view with separate parts of a valve group according to the present invention, according to a second embodiment;
- figure 6 shows the valve group in figure 5 in an assembled view;
- figures 7a, 7b and 7c show a sectional view of the valve group in figure 6, housed in a conduit, in which the shutter is positioned in a base position, in an adjustment position and in a safety position;
- figure 8 shows a view with separate parts of a valve group according to the present invention, according to a third embodiment;
- figure 9 shows the valve group in figure 8 in an assembled view;
- figures 10a and 10b show a sectional view of the valve group in figure 9, housed in a conduit, in which the shutter is positioned in a base position and in an adjustment position.

### Detailed description

In the accompanying drawings, reference numeral 1 indicates a valve group of the present invention.

Furthermore, in the accompanying drawings, reference numeral 900 indicates an oil management assembly of a vehicle which is in turn the subject of the present invention.

Specifically, the valve group 1 is suitable for being part of a pressurized oil circuit of a vehicle. Thereby, the valve group 1 is suitable for managing the fluid connection of a plurality of operating groups.

According to a preferred embodiment, "operating groups" is intended as a plurality of groups and components of the vehicle, such as the engine group, the transmission group, the gearbox group, but also a filtration group or a heat exchanger group or a pump group. Preferably, operating groups is intended as components designed to perform specific operations of the vehicle, for example for the motion thereof, but at the same time also specific operations on the oil, such as filtration or temperature adjustment operations.

In accordance with the present invention, the valve group 1 is suitable for managing the flow of oil towards a heat exchanger group or towards another vehicle operating group. In some embodiments, said vehicle operating group is a filtration group. In other embodiments, said vehicle operating group is a gearbox group or a transmission group or an engine group, i.e., groups which need to receive a certain amount of pressurized oil to best operate.

In accordance with a preferred embodiment, the oil management assembly 900 is mountable, for example by means of a specially shaped flange, on the engine group, or on the transmission group, or on the gearbox group of a motor vehicle, to be fluidically connected thereto.

According to other preferred embodiments, the oil management assembly 900 is also mountable on other operating groups of the vehicle.

According to a further preferred embodiment, the valve group 1 is suitable to manage the oil flow between two heat exchangers.

Preferably, the valve group 1 is suitable to manage the oil flow towards a first heat exchanger 920, for example an oil/water exchangers adapted to heat oil, or towards a second heat exchangers 910, for example an oil/water exchangers adapted to cold oil.

In accordance with the present invention, the oil management assembly comprises a heat exchanger group 920. In a preferred embodiment, the heat exchanger group 920 is of the plate type suitable for delimiting an alternating succession of passage channels for the coolant (e.g., water and glycol) and for the oil, so that the oil in contact with the plates performs a heat exchange thereto or therefrom, increasing or decreasing the temperature thereof. The present invention is not limited to the type of heat exchanger group.

Furthermore, the oil management assembly 900 comprises a support group 980 and said heat exchanger group 920. Preferably, the support group 980 is fixable to the engine group, or to other operating groups of the vehicle, for example by means of a specially shaped flange.

According to the present invention, the oil management assembly 900 is therefore suitable for fluidically connecting the heat exchanger group 920 and the further operating group of the vehicle.

In accordance with a preferred embodiment, the same oil management assembly 900 comprises said operating group 910 for example in the form of a filtration group 910. In other words, the support group 980 is such as to house, support and above all fluidically connect the heat exchanger group 920 and said filtration group 910.

In accordance with the present invention, the valve group 1 is housable in a conduit 8 which is fluidically connected to a vehicle operating group and to a heat exchanger group 920.

Preferably, said conduit 8 is obtained in the oil management assembly 900. Preferably, said conduit 8 is obtained in the support group 980 of said oil management assembly 900.

According to a preferred embodiment, the conduit 8 extends along a conduit axis C-C.

Preferably, the conduit 8 comprises an inlet mouth 89 fluidically connectable to a circulation conduit of the vehicle oil circuit to allow the oil to enter the conduit 8.

In accordance with a preferred embodiment, the conduit 8 comprises a conduit mouth 85 axially distal from said inlet mouth 89.

Furthermore, the conduit 8 comprises conduit side walls 80.

In addition, the conduit 8 comprises a first conduit opening 81 and a second conduit opening 82 respectively for fluid connection to the vehicle operating group, preferably but not necessarily to the filtration group 910, and said heat exchanger group 920.

The first conduit opening 81 and the second conduit opening 82 are respectively axially spaced apart along the conduit axis C-C.

According to a preferred embodiment, the aforementioned support group 980 is a "solid" component, for example made of aluminum or plastic, and the conduit 8 is obtained therein. In other words, the side walls of the conduit 80 are obtained in said "solid" component.

In accordance with the present invention, the valve group 1 is housable, at least partially, in the conduit 8.

According to a preferred embodiment, the valve group 1 is insertable/extractable as a cartridge in/from the conduit 8 through the conduit mouth 85. Specifically, the valve group 1 is substantially or at least partially insertable in the conduit 8 with a single operation.

The valve group 1 extends in length along an axis X-X. In a configuration of the valve group 1 housed in the conduit 8, said axis X-X corresponds with the conduit axis C-C.

In accordance with the present invention, the valve group 1 comprises a plurality of specific components.

The valve group 1 comprises a valve body 2 extending along the axis X-X. Preferably, the valve body 2 comprises a body cavity 200. The oil is suitable for flowing in said body cavity 200.

In fact, the valve body 2 extends along the axis X-X between a first end 20 through which the oil flows and a second end 25.

Preferably, said first end 20 is the inlet end of the oil in the body cavity 200.

Preferably, said second end 25 is instead a closing end which prevents further oil flow.

In other words, said second end 25 is instead a closing end which prevents the further flow of oil in addition beyond the housing space of the valve group 1 provided in the conduit 8.

According to a preferred embodiment, said second end 25 is an inner wall of the conduit 8 positioned distally from the first end 20 along the axis X-X.

In accordance with the invention, the valve body 2 comprises a first body opening 21 and a second body opening 22 positioned axially spaced apart from one another along the axis X-X.

In a configuration of the valve group 1 housed in the conduit 8, the first body opening 21 and the second body opening 22 face the first conduit opening 81 and the second conduit opening 82.

According to the present invention, the valve body 2 further comprises at least one guide slot 26 extending axially with respect to the axis X-X. The purpose of such a guide slot 26 will be fully described and highlighted in the following.

Preferably, the valve body 2 comprises a plurality of guide slots 26, preferably two guide slots 26, preferably three guide slots 26, angularly equally spaced apart, which extend axially with respect to the axis X-X.

Preferably, each guide slot 26 is laterally delimited by guide walls 260.

In accordance with the present invention, said second end 25 is suitable for engaging, in the embodiments where it is present, the conduit mouth 85 described, sealing it. Preferably, said second end 25 is specially shaped, for example comprising special slots to engage the conduit opening 85 or to be mountable to the support group 980 by specific screw means.

According to a preferred embodiment, said second end 25 comprises a closing wall.

According to a preferred embodiment, the second end 25 comprises and houses a sealing gasket 259 suitable for engaging the side walls of the conduit 80.

In accordance with a preferred embodiment, the valve group 1 comprises a shutter 3.

The shutter 3 extends along the axis X-X, fitted, to be axially movable, onto the valve body 2.

In accordance with a preferred embodiment, the shutter 3 comprises a shutter body 30 fitted, to be axially movable, onto the valve body 2.

According to the present invention, therefore, the shutter 3, in particular the shutter body 30, in a configuration of the valve group 1 housed in the conduit 8, is radially positioned between the valve body 2 and the conduit side walls 80.

The shutter 3 comprises a first shutter opening 31 and a second shutter opening 32.

Preferably, the first shutter opening 31 and the second shutter opening 32 are included in the shutter body 30.

Furthermore, according to the present invention, the shutter 3 comprises a guide element 36 extending radially through the guide slot 26.

Preferably, therefore, the guide element 36, by passing through the guide slot 26, engaging the guiding walls 260, guides the trajectory of the shutter with respect to the axis X-X.

According to a preferred embodiment, the shutter 3 comprises a plurality of guide elements 36 extending radially through each guide slot 26.

In accordance with a preferred embodiment, the guide elements 36 extend radially, mutually engaging, for example inside the body cavity 200, in a central shutter portion 360.

According to a preferred embodiment, each guide slot 26 extends with respect to the axis X-X linearly parallel thereto, so as to guide the shutter 3 in a linear movement, parallel to the axis X-X.

In accordance with an embodiment variant, each guide slot 26 extends with respect to the axis X-X with a curvilinear trend, for example in a spiral, so as to guide the shutter 3 in a roto-translation movement, i.e., along the axis X-X and around the axis X-X. In accordance with such a preferred embodiment, the above-described openings are both axially and angularly spaced from one another with respect to the axis X-X.

According to a preferred embodiment, the shutter 3 is made of plastic material.

According to a preferred embodiment, the shutter body 30 is made of plastic material.

In accordance with the present invention, the valve group 1 comprises a control device 4 engaged to the valve body 2 and to the shutter 3 to control the position of the shutter 3 along the axis X-X.

According to the invention, the control device 4 is suitable for controlling the position of the shutter 3 between a base position in which the hydraulic passage section defined by the alignment of the first shutter opening 31 with the first body opening 21 is greater than or equal to the hydraulic passage section defined by the alignment of the second shutter opening 32 with the second body opening 22, and an adjustment position in which the hydraulic passage section defined by the alignment of the first shutter opening 31 with the first body opening 21 is smaller than the hydraulic passage section defined by the alignment of the second shutter opening 32 and the second body opening 22.

According to a preferred embodiment, in the base position, the flow of oil flowing in the conduit 8 is suitable for flowing more through the first conduit opening 81, towards the vehicle operating group, i.e., towards the engine group, the transmission group or the gearbox group or towards the filtration group or toward a second heat exchanger 910 or in a point of the oil circuit downstream of the heat exchanger 920.

According to a preferred embodiment, in the base position, the flow of oil flowing in the conduit 8 is divided into substantially equal portions towards the vehicle operating group, i.e., towards the engine group, transmission group or gearbox group or towards the filtration group or toward a second heat exchanger 910, and towards the heat exchanger 920.

In accordance with a preferred embodiment, in the adjustment position, the flow of oil flowing in the conduit 8 is suitable for flowing more through the second conduit opening 82, towards the heat exchanger group 920. In such an adjustment position, therefore, the valve group 1 is suitable for control the adjustment of the oil temperature.

In other words, the valve group 1 is suitable for adjusting the preferential direction of oil flow. Preferably, the valve group 1 then adjusts the possible amount of flow towards the operating group or towards the heat exchanger group, as required. According to a preferred embodiment, the outflow command towards one operating group does not inhibit the outflow command towards the other operating group.

However, in accordance with a preferred embodiment, in the base position, the hydraulic section defined by the alignment of the second shutter opening 32 with the second body opening 22 is substantially zero, since the second shutter opening 32 and the second body opening 22 are substantially misaligned, and in the adjustment position the hydraulic passage section defined by the alignment of the first shutter opening 31 with the first body opening 21 is substantially zero, since the first shutter opening 31 and the first body opening 21 are substantially misaligned.

In other words, the valve group 1 is suitable for adjusting the flow with an on-off mode. Preferably, the valve group 1 then adjusts the flow of oil towards an operating group or towards the heat exchanger group.

According to this embodiment, substantially zero hydraulic section means that the passage section defined by the misalignment of the shutter opening with respect to the valve body opening causes an oil flow rate not exceeding 5% of the oil flow which is observed in the case of completely aligned shutter opening and valve body opening.

In accordance with this embodiment, with on/off mode the possibility of any leakage through the related openings is not excluded, depending on the permeability of the components interacting with the valve. In particular, leakage means an oil flow rate which does not exceed 5% of the flow rate observed with the hydraulic passage section completely open.

According to a preferred embodiment, the control device 4 comprises a control member 40 engaged to the valve body 2 and to the shutter 3.

According to a preferred embodiment, the control member 40 is operable as a function of the operating conditions of the oil, so as to position, when necessary, the shutter 3 in the adjustment position, directing oil towards the heat exchanger group 920.

According to a preferred embodiment, the control member 40 is operable as a function of the oil temperature.

According to a preferred embodiment, the control member 40 is operable as a function of the oil pressure.

According to a preferred embodiment, the control member 40 is therefore suitable for being controlled as a function of the detected oil temperature and/or pressure.

In accordance with some preferred embodiments, the control member 40, and therefore the valve group 1, is operatively connected to a specific detection sensor element (for example, temperature and/or pressure). Preferably, said temperature and/or pressure detection element is connected to the circuit and/or to the vehicle operating groups. Preferably, the control member 40, and therefore the valve group, is operatively connected to the electronic control unit ECU of the vehicle.

Preferably, the control member 40, and therefore the valve group, comprises an electrical connector for connecting to the electronic control unit ECU of the vehicle.

Preferably, the control member 40, and therefore the valve group, comprises an electric actuator connected to the electronic control unit ECU of the vehicle by means of wireless technology.

Preferably, the control member 40, and therefore the valve group, is operatively connected to the electronic control unit ECU of the vehicle which enables the operation of the control device 4 based on a parameter (e.g., temperature/pressure) measured by the sensor element in turn operatively connected to the electronic control unit ECU.

In accordance with another preferred embodiment, the control member 40 is suitable for detecting the temperature of the oil and react accordingly.

According to a preferred embodiment, the control member 40 is of the temperature-sensitive type.

Preferably, the control member 40 comprises a wax element 400.

According to a preferred embodiment, the control member 40 is housed in the body cavity 200, engaging the second end 25 and the shutter 3.

In accordance with a preferred embodiment, the control member 40 is housed in the body cavity 200, engaging the second end 25 and the at least one guide element 36.

Preferably, the control member 40 with wax element 400 engages the guide element 36 in a region which is proximal to the axis X-X.

Preferably, the control member 40 with wax element 400 engages the guide elements 36, in the embodiment which comprises a plurality thereof, in the central shutter position 360.

Preferably, the wax element 400 is therefore housed in the body cavity 200.

Preferably, the wax element 400 is positioned near the second end 25

Preferably, the wax element 400 radially faces the first body opening 21.

In accordance with a preferred embodiment, the control member 40 comprises an electric control actuator 410 and a control pin 415 moved axially by the electric control actuator 410.

Preferably, the electric control actuator 410 is an electric motor. Preferably, said electric motor is of the brushless or brushed type.

Preferably, the electric control actuator 410 comprises a solenoid element.

According to such a preferred embodiment, the electric control actuator 410 is housed at the second end 25 and the control pin 415 engages the shutter 3.

According to such a preferred embodiment, the electric control actuator 410 is housed at the second end 25 and the control pin 415 engages the at least one guide element 36.

In accordance with a preferred embodiment, the control pin 415 engages the guide element 36 in a region near the axis X-X.

Preferably, the control pin 415 engages the guide elements 36, in the embodiment comprising a plurality thereof, in the central shutter position 360.

According to a preferred embodiment, the electric control actuator 410 is housed at the second end 25 outside the body cavity 200. For example, preferably, the electric control actuator 410 is located outside the support group 920.

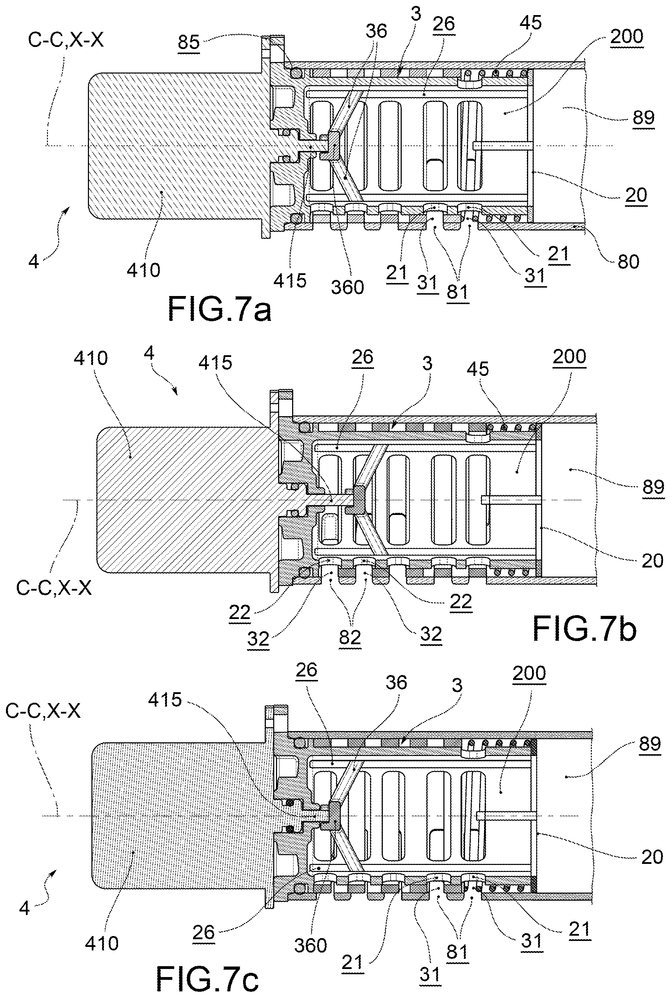

In accordance with a preferred embodiment, in a breakage and/or malfunction condition of the electric control actuator 410, the shutter 3 is positioned in a safety position in which the first shutter opening 31 and the first body opening 21 are at least partially aligned, and the second shutter opening 32 and the second body opening 22 are at least partially aligned. Preferably, therefore, with the broken or malfunctioning electric control actuator 410, the shutter 3 is placed in a failsafe condition, ensuring a predefined inflow of oil both through the second conduit opening 82 and through the first conduit opening 81. Such a situation is shown in figure 7c, for example.

According to a preferred embodiment, the control member 40 comprises a shape memory element 420, engaged at one end to the valve body 2 and at the other end to the shutter 3.

In accordance with a preferred embodiment, the shape memory element 420 extends along the axis X-X, fitted onto the valve body 2, so as to be, in a configuration of the valve group 1 housed in the conduit 8, radially positioned between the valve body 2 and the conduit side walls 80, engaging the second end 25 on one side and a first shutter edge 38 on the other side. According to a preferred embodiment, the shape memory element 420 is a helical spring.

In accordance with an alternative embodiment, the control member 40 comprises an electrically powered wax element 400.

Furthermore, in accordance with a preferred embodiment, the control device 4 comprises a return member 45 suitable for performing an action on the shutter 3 which is contrary to that of the control member 40, so as to bring the shutter 3 to the base position.

Furthermore, in accordance with a preferred embodiment, the control device 4 comprises a return member 45 suitable for performing an action on the shutter 3 which is contrary to that of the control member 40, so as to bring the shutter 3 to the safety position.

In accordance with a preferred embodiment, the return member 45 is a spring extending along the axis X-X, fitted, to be axially movable, onto the valve body 2, so as to be, in a configuration of the valve group 1 housed in the conduit 8, radially positioned between the valve body 2 and the conduit side walls 80, engaging at one end an abutment element 20' placed at the first end 20 and at the other end a second shutter edge 39.

In accordance with a preferred embodiment, the valve body 20 and the shutter 3 have a substantially axially symmetrical extension.

According to the present invention, the term "opening" means an opening through which the oil flows. Specifically, the shape or number of fluid passages which make up the respective opening do not limit the present invention. In fact, as shown for example in the accompanying drawings, a plurality of fluid passages corresponds to an opening.

According to a preferred embodiment, each conduit opening 81, 82, each body opening 21, 22 and each shutter opening 31, 32 consists of a plurality of fluid passages axially spaced apart from one another.

Preferably, each fluid passage extends over a circumferential section with respect to the conduit axis C-C and the axis X-X.

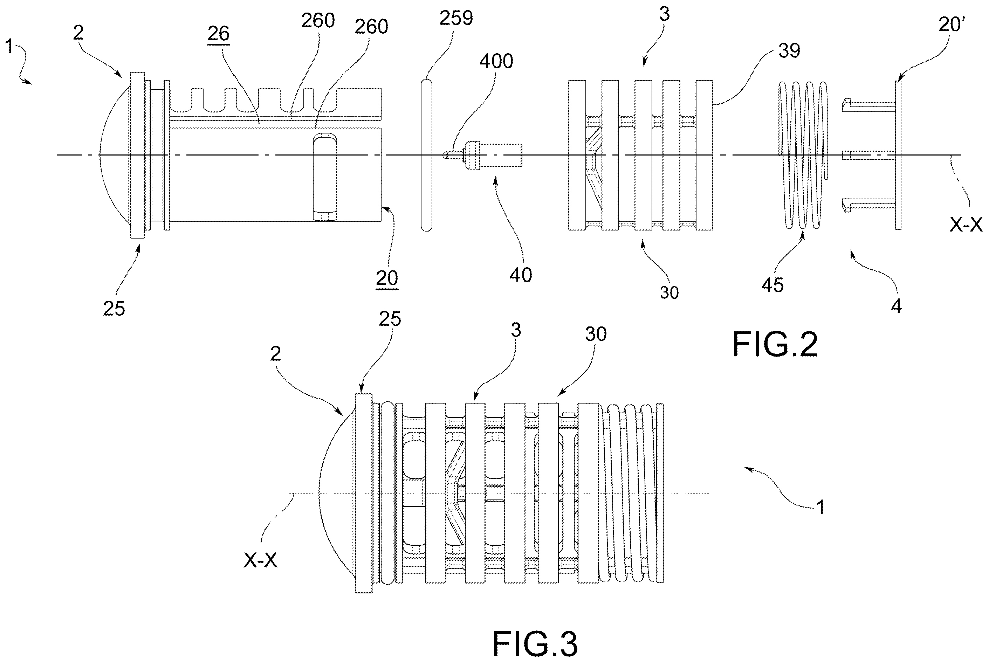

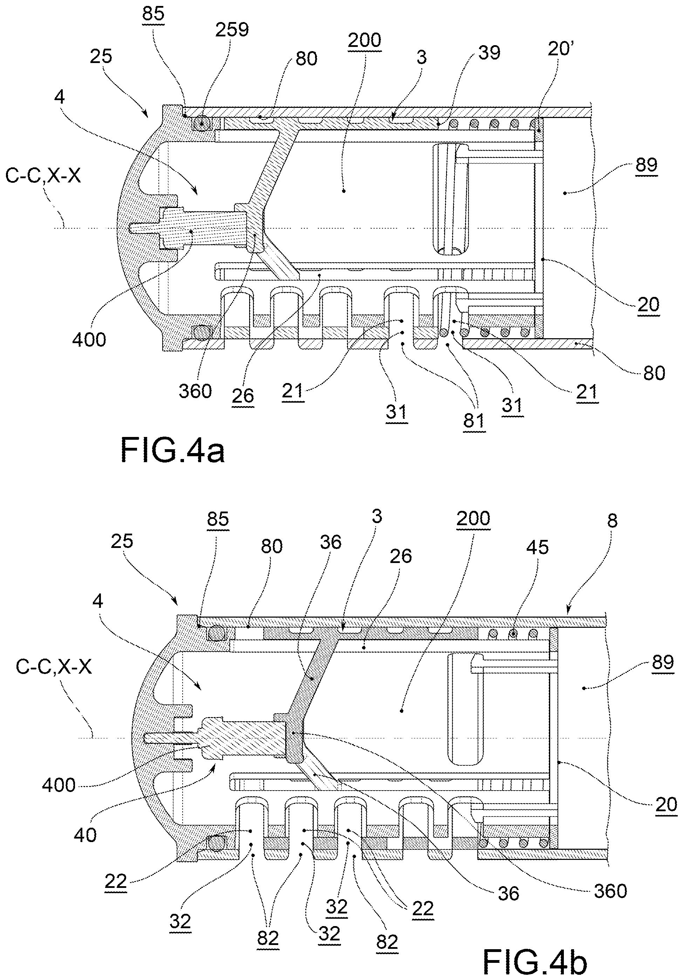

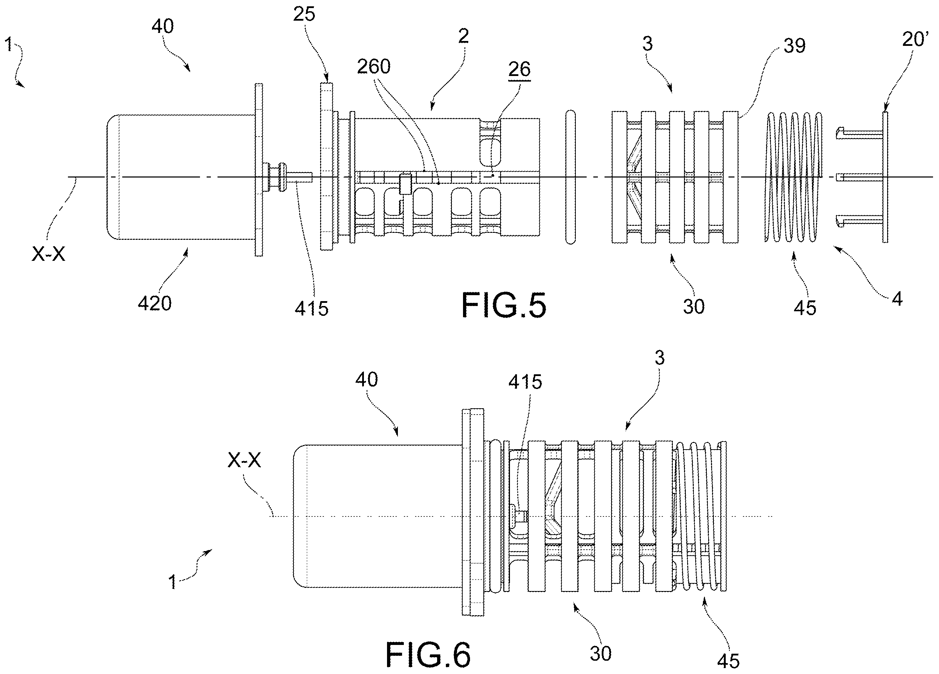

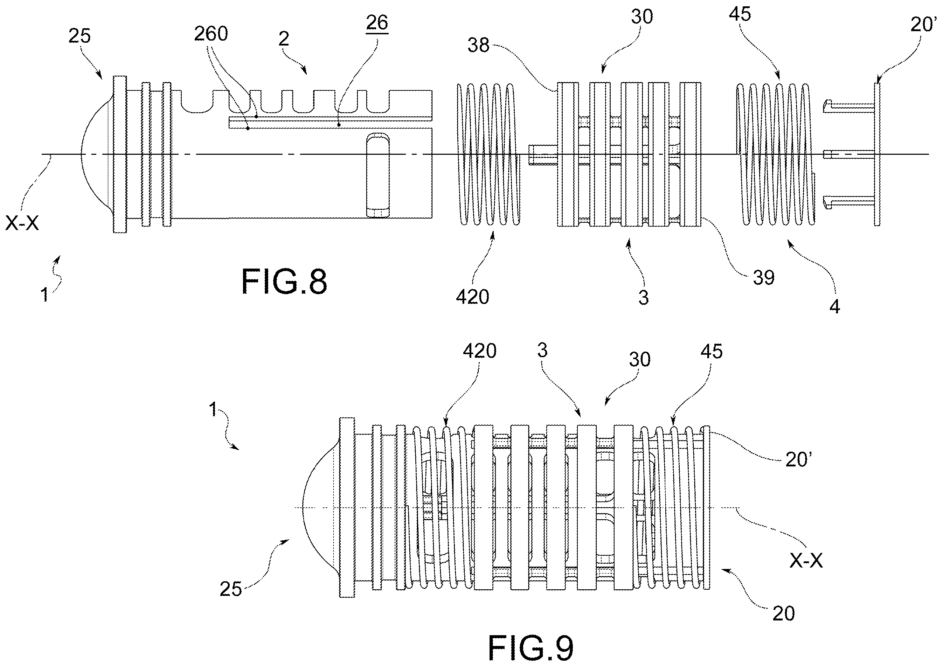

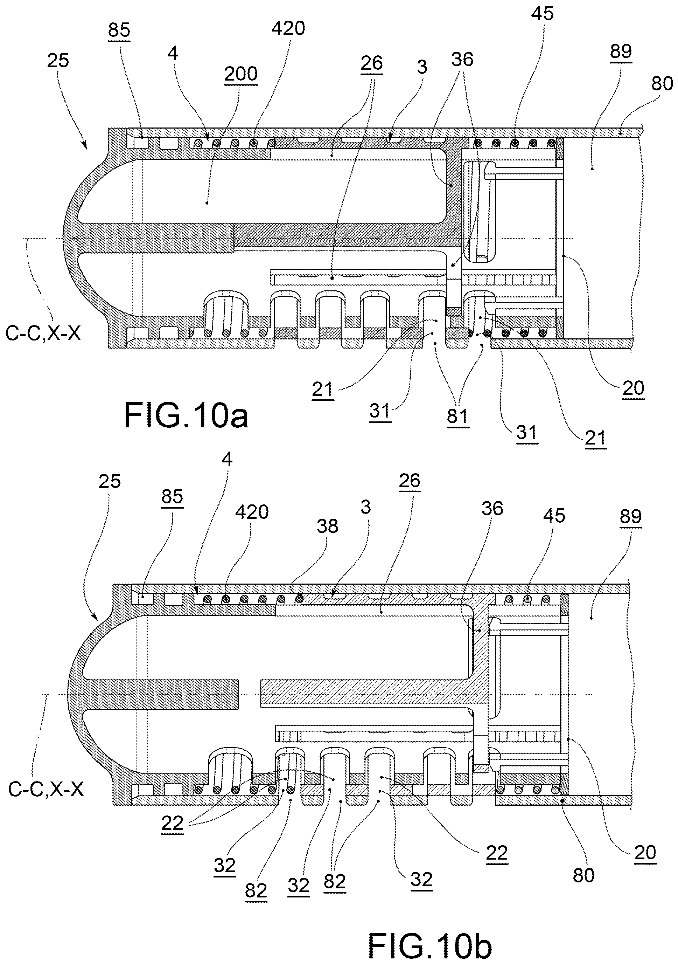

In particular, advantageously, such an embodiment is suitable for adjusting the oil flow with the correspondence of short axial strokes of the shutter, increasing the compactness of the valve group, optimizing the use of the available spaces, and increasing the response time of the valve in managing the oil flow. Such specific embodiments are widely shown in figures 2 to 10.

Innovatively, the valve group, the pressurized oil circuit which comprises it and the oil management assembly which comprises it fully fulfill the purpose of the present invention, overcoming the typical problems of the prior art.

Advantageously, in fact, the valve group is suitable for managing and direct the oil in the best possible manner according to the physical features of the oil, so as to allow the engine and/or gearbox and/or transmission group to always work in optimal conditions.

In particular, by managing the passage of oil through the heat exchanger group, the oil is heated or cooled in a manner such that it is returned to the engine group, the gearbox group, or the transmission group at a desired temperature, preferably optimal.

In fact, advantageously, in an operating condition corresponding to the cold engine group (or gearbox group, or transmission group) in which the oil temperature is too low, the valve group, in the shortest possible time, directs the oil towards the heat exchanger to heat it. In other words, advantageously, the valve group is suitable for controlling the oil according to the temperature thereof so as to accelerate a reheating and thus accelerate the heating step of the engine itself.

Advantageously, the valve group is simple and economical to manufacture.

Advantageously, the valve group is suitable for effectively operating even in the presence of a high viscosity oil.

Advantageously, the valve group is designed so that the components thereof work even when subjected to high stresses.

Advantageously, the shutter group is positionable almost entirely outside the central cavity. Advantageously, the shutter group is protected by the valve body.

Advantageously, the main components of the valve group are arranged so as to not obstruct the circulation of the oil in the inner cavity of the valve body, reducing the pressure drops in the circuit imposed by the presence of the valve without affecting the ability to manage the oil flow.

Advantageously, the shutter is positioned radially between the inner surface of the conduit and the outer surface of the valve body, minimizing the undesirable effect of any dragging forces exerted by the oil, in particular at low temperature (high viscosity), ensuring a better control on the position of the shutter, reducing the stresses on the control device, thus increasing the reliability of the valve group.

Advantageously, the valve body of the valve group is a multifunctional element suitable for supporting both the control device and the shutter while guiding the movement of the shutter by means of guide slots obtained on the valve body itself.

Advantageously, the valve body of the valve group is a multifunctional element suitable for supporting both the control device and the shutter while guiding the movement of the shutter by means of guide slots obtained on the valve body itself and simultaneously closing the end of the housing conduit.

Advantageously, high amounts of oil are adjusted by including minimum shutter strokes.

Advantageously, the oil flow is managed by means of minimum axial shutter strokes, resulting in a simplification of the structure of the control device.

Advantageously, the excursion of the control pin of an electric actuator is minimized, ensuring a greater level of reliability of the valve group and reducing the cost thereof.

Advantageously, the valve group also includes a specific safety function, by including a failsafe function even in the presence of breakages or malfunctions of the electric control actuator, always ensuring a certain flow of oil towards the heat exchanger, avoiding undesired overheating of the circuit and/or a degradation of the properties of the oil.

Advantageously, the valve group, as a function of the application thereof, for example as a function of the type of pressurized oil circuit for which it is intended, for example whether it is in the engine oil or gearbox oil or transmission oil circuit, or whether it is on small or medium-sized motor vehicles, or on industrial vehicles, has the same components mentioned above, varying from one application to another only in size.

Advantageously, the valve group is implementable both on vehicles powered by an internal combustion engine and on vehicles with hybrid or electric power.

Moreover, advantageously, a specific design of the conduit is not necessary since the valve group operates on the oil independently. In other words, it is advantageously unnecessary to provide the conduit with specific shoulders at the different positions of the shutter, since the valve group independently performs the described positions by operating directly with the shutter, modifying the position thereof according to the different operating conditions.

It is apparent that, in order to meet contingent needs, those skilled in the art may make changes to the valve group or the oil circuit or the filtration assembly which are fully contained within the scope of protection as defined by the following claims.

### List of reference numerals:

1 valve group
2 valve body
20 first end
20' abutment element
21 first body opening
22 second body opening
25 second end
259 sealing gasket
26 guide slot
260 guide walls
200 body cavity
81 first conduit opening
82 second conduit opening
3 shutter
30 shutter body
31 first shutter opening
32 second shutter opening
36 guide element
38 first shutter edge
39 second shutter edge
4 control device
40 control member
400 wax element
410 electric control actuator
415 control pin
420 shape memory element
8 conduit
80 conduit side walls
81 first conduit opening
82 second conduit opening
85 conduit mouth
89 inlet mouth
900 oil management assembly
910 operating group
920 heat exchanger group
980 support group
C-C conduit axis
X-X axis

## Claims

1. A valve group (1) housable in a conduit (8) of a pressurized oil circuit, wherein said conduit (8) is in fluid communication with a vehicle operating group and with a heat exchanger group (920), wherein said conduit (8) extends along a conduit axis (C-C) comprising conduit side walls (80) and a first conduit opening (81) and a second conduit opening (82) positioned axially spaced apart on the conduit side walls (80) fluidly connected to the operating group and the heat exchanger group (920), respectively;
wherein the valve group (1) extends in length along an axis (X-X) coinciding, in a configuration housed in the conduit (8), with the conduit axis (C-C), and comprises:
i) a valve body (2), comprising a body cavity (200), extending along the axis (X-X), between a first end (20) through which the oil entering the body cavity (200) flows and a second end (25) axially spaced apart, wherein the valve body (2) comprises a first body opening (21) and a second body opening (22) positioned axially spaced apart, so as to face, in a configuration of the valve group (1) housed in the conduit (8), the first conduit opening (81) and the second conduit opening (82), respectively, wherein the valve body (2) further comprises at least one guide slot (26) extending axially with respect to the axis (X-X);
ii) a shutter (3), extending along the axis (X-X), comprising a shutter body (30) fitted, axially movable, onto the valve body (2), so as to be, in a configuration of the valve group (1) housed in the conduit (8), radially positioned between the valve body (2) and the conduit side walls (80), wherein the shutter (3) comprises, on said shutter body (30), a first shutter opening (31) and a second shutter opening (32), wherein the shutter (3) comprises a guide element (36) extending radially through the guide slot (26);
iii) a control device (4) engaged with the valve body (2) and the shutter (3) to control the position of the shutter (3) along the axis (X-X) between a base position in which the hydraulic passage section defined by the alignment of the first shutter opening (31) to the first body opening (21) is greater than or equal to the hydraulic passage section defined by the alignment of the second shutter opening (32) with the second body opening (22), and an adjustment position in which the hydraulic passage section defined by the alignment of the first shutter opening (31) with the first body opening (21) is smaller than the hydraulic passage section defined by the alignment of the second shutter opening (32) with the second body opening (22).

2. Valve group (1) according to claim 1, wherein in the base position, the hydraulic section defined by the alignment of the second shutter opening (32) with the second body opening (22) is substantially zero, since the second shutter opening (32) and the second body opening (22) are substantially misaligned, and wherein in the adjustment position the hydraulic passage section defined by the alignment of the first shutter opening (31) with the first body opening (21) is substantially zero, since the first shutter opening (31) and the first body opening (21) are substantially misaligned.

3. Valve group (1) according to any one of the preceding claims, wherein each conduit opening (81, 82), each body opening (21, 22) and each shutter opening (31, 32) consist of a plurality of fluid passages axially spaced apart from one another, preferably each fluid passage extends over a circumferential section with respect to the conduit axis (C-C) and the axis (X-X).

4. Valve group (1) according to any one of the preceding claims, wherein the valve body (2) comprises a plurality of guide slots (26), preferably two guide slots (26), preferably three guide slots (26), angularly equally distanced, extending axially with respect to the axis (X-X), wherein the shutter (3) comprises a plurality of guide elements (36) extending radially through each guide slot (26).

5. Valve group (1) according to claim 4, wherein the guide elements (36) extend radially by mutually engaging for example inside the body cavity (200), in a central shutter portion (360).

6. Valve group (1) according to any one of the preceding claims, wherein the at least one guide slot (26) extends with respect to the axis (X-X) linearly parallel thereto, so that an action of the control device (4) corresponds to an axial translation of the shutter (3).

7. Valve group (1) according to any one of the preceding claims, wherein the control device (4) comprises a control member (40) engaged with the valve body (2) and the shutter (3), wherein the control member (40) is operable as a function of the operating conditions of the oil, so as to guide the shutter (3) in the base position or in the adjustment position.

8. Valve group (1) according to claim 7, wherein the control member (40) is of the temperature-sensitive type, for example comprising a wax element (400), wherein the control member (40) is housed in the body cavity (200), engaging the second end (25) and the at least one guide element (36).

9. Valve group (1) according to claim 7, wherein the control member (40) comprises an electric control actuator (410) and a control pin (415) moved axially by the electric control actuator (410), wherein said electric control actuator (410) is housed at the second end (25) and the control pin (415) engages the at least one guide element (36).

10. Valve group (1) according to claim 9, wherein the electric control actuator (410) is housed at the second end (25) outside the body cavity (200).

11. Valve group (1) according to any one of claims 9 or 10, wherein in a breakage and/or malfunction condition of the electric control actuator (410), the shutter (3) is positionable in a safety position in which the first shutter opening (31) and the first body opening (21) are at least partially aligned, and the second shutter opening (32) and the second body opening (22) are at least partially aligned.

12. Valve group (1) according to claim 7, wherein the control member (40) comprises a shape memory element (420), engaged at one end with the valve body (2) and at the other end with the shutter (3).

13. Valve group (1) according to claim 12, wherein the shape memory element (420) extends along the axis (X-X), fitted onto the valve body (2), so as to be, in a configuration of the valve group (1) housed in the conduit (8), radially positioned between the valve body (2) and the conduit side walls (80), engaging the second end (25) on one side and a first shutter edge (38) on the other side.

14. Valve group (1) according to claim 13, wherein the shape memory element (420) is a helical spring.

15. Valve group (1) according to any one of claims 7 to 14, wherein the control device (4) comprises a return member (45) adapted to perform an action on the shutter (3) which is contrary to that of the control member (40), so as to bring the shutter (3) in the base position.

16. Valve group (1) according to claim 15 in combination with claim 11, wherein the return member (45) is adapted to perform an action on the shutter (3) which is contrary to that of the control member (40), so as to bring the shutter (3) to the safety position.

17. An oil management assembly (900) of a pressurized oil circuit of a vehicle fluidly connected to a vehicle operating group, for example to an engine assembly, or to a transmission assembly, comprising:
i) a heat exchanger group (920);
ii) a support assembly (980) comprising at least one conduit (8) extending along a conduit axis (C-C) comprising conduit side walls (80) on which it comprises a first conduit opening (81) and a second conduit opening (82) for the fluid connection with the operating group and said heat exchanger group (920), respectively;
iii) a valve group (1) which housable in said conduit (8), according to any one of claims 1 to 16.

18. Oil management assembly (900) of a vehicle, according to claim 17, which is fluidly connectable to a vehicle operating group, such as the vehicle gearbox assembly or engine assembly, comprising:
iv) an oil filtration group (910) supported and fluidly connected to the support assembly (980) by means of the conduit (8), wherein the first conduit opening (81) is fluidly connected to said oil filtration assembly (910).

## Patentansprüche

1. Ventilgruppe (1), die in einer Leitung (8) eines unter Druck stehenden Ölkreislaufs aufgenommen werden kann, wobei die Leitung (8) in Fluidverbindung mit einer Fahrzeugbetriebsgruppe und mit einer Wärmetauschergruppe (920) steht, wobei die Leitung (8) sich entlang einer Leitungsachse (C-C) erstreckt, Leitung-Seitenwände (80), eine erste Leitungsöffnung (81) und eine zweite Leitungsöffnung (82) umfasst, die axial beabstandet an den Leitung-Seitenwänden (80) angeordnet sind und fluidisch mit der Betriebsgruppe und der Wärmetauschergruppe (920) verbunden sind;
wobei sich die Ventilgruppe (1) in Längsrichtung entlang einer Achse (X-X) erstreckt, die in einer Konfiguration, in der sie in der Leitung (8) aufgenommen wird, mit der Leitungsachse (C-C) zusammenfällt, und umfasst:
i) einen Ventilkörper (2) umfassend einen Körperhöhlraum (200) der sich entlang der Achse (X-X) zwischen einem ersten Ende (20), durch das das in den Körperhohlraum (200) eintretende Öl fließt, und einem axial beabstandeten zweiten Ende (25) erstreckt, wobei der Ventilkörper (2) eine erste Körperöffnung (21) und eine zweite Körperöffnung (22) umfasst, die axial beabstandet angeordnet sind, sodass sie in einer Konfiguration, in der die Ventilgruppe (1) in der Leitung (8) aufgenommen wird, die erste Leitungsöffnung (81) bzw. die zweite Leitungsöffnung (82) gegenüberliegen, wobei der Ventilkörper (2) ferner mindestens einen Führungsschlitz (26) umfasst, der sich axial in Bezug auf die Achse (X-X) erstreckt;
ii) einen Schieber (3), der sich entlang der Achse (X-X) erstreckt und einen Schieberkörper (30) umfasst, der axial auf dem Ventilkörper (2) beweglich eingebaut wird, sodass er in einer Konfiguration, in der die Ventilgruppe (1) in der Leitung (8) aufgenommen wird, radial zwischen dem Ventilkörper (2) und den Leitung-Seitenwänden (80) positioniert ist, wobei der Schieber (3) an dem Schieberkörper (30) eine erste Schieberöffnung (31) und eine zweite Schieberöffnung (32) umfasst, wobei der Schieber (3) ein Führungselement (36) umfasst, das sich radial durch den Führungsschlitz (26) erstreckt;
iii) eine Steuervorrichtung (4), die mit dem Ventilkörper (2) und dem Schieber (3) in Eingriff steht, um die Position des Schiebers (3) entlang der Achse (X-X) zwischen einer Grundposition, in der der hydraulische Durchgangsabschnitt, der durch die Ausrichtung der ersten Schieberöffnung (31) mit der ersten Körperöffnung (21) definiert wird, größer oder gleich dem hydraulischen Durchgangsabschnitt ist, der durch die Ausrichtung der zweiten Schieberöffnung (32) mit der zweiten Körperöffnung (22) definiert wird und einer Einstellposition zu steuern, in der der hydraulische Durchgangsabschnitt, der durch die Ausrichtung der ersten Schieberöffnung (31) mit der ersten Körperöffnung (21) definiert wird, kleiner als der hydraulische Durchgangsabschnitt ist, der durch die Ausrichtung der zweiten Schieberöffnung (32) mit der zweiten Körperöffnung (22) definiert wird.

2. Ventilgruppe (1) nach Anspruch 1, wobei der hydraulische Abschnitt, der durch die Ausrichtung der zweiten Schieberöffnung (32) mit der zweiten Körperöffnung (22) definiert wird, in der Grundstellung im Wesentlichen null ist, da die zweite Schieberöffnung (32) und die zweite Körperöffnung (22) im Wesentlichen falsch ausgerichtet sind, und wobei der hydraulische Durchgangsabschnitt, der durch die Ausrichtung der ersten Schieberöffnung (31) mit der ersten Körperöffnung (21) definiert wird, in der Einstellstellung im Wesentlichen null ist, da die erste Schieberöffnung (31) und die erste Körperöffnung (21) im Wesentlichen falsch ausgerichtet sind.

3. Ventilgruppe (1) nach einem der vorhergehenden Ansprüche, wobei jede Leitungsöffnung (81, 82), jede Körperöffnung (21, 22) und jede Schieberöffnung (31, 32) aus einer Mehrzahl von axial beabstandeten Fluiddurchgängen bestehen, wobei jeder Fluiddurchgang sich vorzugsweise über einen Umfangsabschnitt in Bezug auf die Leitungsachse (C-C) und die Achse (X-X) erstreckt.

4. Ventilgruppe (1) nach einem der vorhergehenden Ansprüche, wobei das Ventilkörper (2) eine Mehrzahl von Führungsschlitzen (26) umfasst, vorzugsweise zwei Führungsschlitze (26), vorzugsweise drei Führungsschlitze (26), die gleichmäßig winkelig beabstandet sind und sich axial in Bezug auf die Achse (X-X) erstrecken, wobei der Schieber (3) eine Mehrzahl von Führungselementen (36) umfasst, die sich radial durch jeden Führungsschlitz (26) erstrecken.

5. Ventilgruppe (1) nach Anspruch 4, wobei sich die Führungselemente (36) radial erstrecken, indem sie beispielsweise innerhalb des Körperhohlraums (200) in einem zentralen Schieberabschnitt (360) gegenseitig in Eingriff stehen.

6. Ventilgruppe (1) nach einem der vorhergehenden Ansprüche, wobei mindestens ein Führungsschlitz (26) sich in Bezug auf die Achse (X-X) und parallel dazu erstreckt, so dass eine Tätigkeit der Steuervorrichtung (4) einer axialen Verschiebung des Schiebers (3) entspricht.

7. Ventilgruppe (1) nach einem der vorhergehenden Ansprüche, wobei die Steuervorrichtung (4) ein Steuerelement (40) umfasst, das mit dem Ventilkörper (2) und dem Schieber (3) in Eingriff steht, wobei das Steuerelement (40) in Abhängigkeit von den Betriebsbedingungen des Öls betätigt werden kann, um den Schieber (3) in die Grundstellung oder in die Einstellstellung zu führen.

8. Ventilgruppe (1) nach Anspruch 7, wobei das Steuerelement (40) temperaturempfindlich ist, umfassend beispielsweise ein Wachselement (400), wobei das Steuerelement (40) in dem Körperhohlraum (200) aufgenommen wird, indem es mit dem zweiten Ende (25) und mindestens mit einem Führungselement (36) in Eingriff steht.

9. Ventilgruppe (1) nach Anspruch 7, wobei das Steuerelement (40) einen elektrischen Steueraktuator (410) und einen Steuerstift (415) umfasst, der axial durch den elektrischen Steueraktuator (410) bewegt wird, wobei der elektrische Steueraktuator (410) an dem zweiten Ende (25) aufgenommen wird und der Steuerstift (415) mit dem mindestens einen Führungselement (36) in Eingriff steht.

10. Ventilgruppe (1) nach Anspruch 9, wobei der elektrische Steueraktuator (410) an dem zweiten Ende (25) außerhalb des Körperhohlraums (200) aufgenommen wird.

11. Ventilgruppe (1) nach einem der Ansprüche 9 oder 10, wobei der Schieber (3) bei einem Bruch und/oder einem Fehlfunktionszustand des elektrischen Steueraktuators (410) in eine Sicherheitsstellung gestellt werden kann, in der die erste Schieberöffnung (31) und die erste Körperöffnung (21) mindestens teilweise ausgerichtet sind, und die zweite Schieberöffnung (32) und die zweite Körperöffnung (22) mindestens teilweise ausgerichtet sind.

12. Ventilgruppe (1) nach Anspruch 7, wobei das Steuerelement (40) ein Formgedächtniselement (420) umfasst, das an einem Ende mit dem Ventilkörper (2) und an einem anderen Ende mit dem Schieber (3) in Eingriff steht.

13. Ventilgruppe (1) nach Anspruch 12, wobei sich das Formgedächtniselement (420) entlang der Achse (X-X) erstreckt, auf dem Ventilkörper (2) eingebaut wird, so dass es in einer Konfiguration der Ventilgruppe (1), die in der Leitung (8) aufgenommen wird, radial zwischen dem Ventilkörper (2) und den Seitenwänden der Leitung (80) positioniert ist, indem es mit dem zweiten Ende (25) auf einer Seite und mit einem ersten Schieberrand (38) auf der anderen Seite in Eingriff steht.

14. Ventilgruppe (1) nach Anspruch 13, wobei das Formgedächtniselement (420) eine Schraubenfeder ist.

15. Ventilgruppe (1) nach einem der Ansprüche 7 bis 14, wobei die Steuervorrichtung (4) ein Rückstellelement (45) umfasst, das eingerichtet ist, eine Wirkung auf dem Schieber (3) auszuüben, die die Wirkung des Steuerelements (40) entgegensetzt, sodass den Schieber (3) in die Grundstellung zu bringen.

16. Ventilgruppe (1) nach Anspruch 15 in Kombination mit Anspruch 11, wobei das Rückstellelement (45) eingerichtet ist, eine Wirkung auf dem Schieber (3) auszuüben, die die Wirkung des Steuerelement (40) entgegensetzt, um den Schieber (3) in die Sicherheitsstellung zu bringen.

17. Ölsteuerungsgruppe (900) eines unter Druck stehenden Ölkreislaufs eines Fahrzeugs, der fluidisch mit einer Fahrzeugbetriebsgruppe verbunden ist, beispielsweise mit einer Motorgruppe oder einer Getriebegruppe, umfassend:
i) eine Wärmetauschergruppe (920);
ii) eine Stützgruppe (980) umfassend mindestens eine Leitung (8), die sich entlang einer Leitungsachse (C-C) erstreckt, umfassend Seitenwände der Leitung (80), worauf sie eine erste Leitungsöffnung (81) und eine zweite Leitungsöffnung (82) zur Fluidverbindung mit der Betriebsgruppe bzw. der Wärmetauschergruppe (920) umfasst;
iii) eine Ventilgruppe (1), die in die Leitung (8) aufgenommen wird, nach einem der Ansprüche 1 bis 16.

18. Ölsteuerungsgruppe (900) eines Fahrzeugs, nach Anspruch 17, die fluidisch mit einer Fahrzeugbetriebsgruppe verbunden werden kann, wie beispielsweise einer Getriebegruppe oder einer Motorgruppe, umfassend:
iv) eine Ölfiltrationsgruppe (910), die von der Stützgruppe (980) gestützt wird und mittels der Leitung (8) fluidisch mit der Stützgruppe (980) verbunden ist, wobei die erste Leitungsöffnung (81) fluidisch mit der Ölfiltrationsgruppe (910) verbunden ist.

## Revendications

1. Un groupe vanne (1) logeable dans un conduit (8) d'un circuit d'huile sous pression,
dans lequel ledit conduit (8) est en communication fluide avec un groupe opérateur de véhicule et avec un groupe échangeur de chaleur (920), dans lequel ledit conduit (8) s'étend le long d'un axe de conduit (C-C) comprenant des parois latérales de conduit (80) et une première ouverture de conduit (81) et une deuxième ouverture de conduit (82) positionnées axialement espacées sur les parois latérales de conduit (80), fluidiquement connectées respectivement au groupe opérateur et au groupe échangeur de chaleur (920) ;
dans lequel le groupe vanne (1) s'étend en longueur le long d'un axe (X-X) coïncidant, dans une configuration logée dans le conduit (8), avec l'axe de conduit (C-C), et comprenant :
i) un corps de vanne (2), comprenant une cavité de corps (200), s'étendant le long de l'axe (X-X), entre une première extrémité (20) à travers laquelle l'huile entrant dans la cavité de corps (200) s'écoule et une deuxième extrémité (25) axialement espacée, dans lequel le corps de vanne (2) comprend une première ouverture de corps (21) et une deuxième ouverture de corps (22) positionnées axialement espacées, de manière à faire face, dans une configuration du groupe vanne (1) logé dans le conduit (8), à la première ouverture de conduit (81) et à la deuxième ouverture de conduit (82), respectivement, dans lequel le corps de vanne (2) comprend en outre au moins une fente de guidage (26) s'étendant axialement par rapport à l'axe (X-X) ;
ii) un obturateur (3), s'étendant le long de l'axe (X-X), comprenant un corps d'obturateur (30) monté, mobile axialement, sur le corps de vanne (2), de manière à être, dans une configuration du groupe vanne (1) logé dans le conduit (8), positionné radialement entre le corps de vanne (2) et les parois latérales du conduit (80), où l'obturateur (3) comprend, sur ledit corps d'obturateur (30), une première ouverture d'obturateur (31) et une deuxième ouverture d'obturateur (32), où l'obturateur (3) comprend un élément de guidage (36) s'étendant radialement à travers la fente de guidage (26) ;
iii) un dispositif de commande (4) engagé avec le corps de vanne (2) et l'obturateur (3) pour commander la position de l'obturateur (3) le long de l'axe (X-X) entre une position de base dans laquelle la section de passage hydraulique définie par l'alignement de la première ouverture d'obturateur (31) avec la première ouverture de corps (21) est supérieure ou égale à la section de passage hydraulique définie par l'alignement de la deuxième ouverture d'obturateur (32) avec la deuxième ouverture de corps (22), et une position de réglage dans laquelle la section de passage hydraulique définie par l'alignement de la première ouverture d'obturateur (31) avec la première ouverture de corps (21) est inférieure à la section de passage hydraulique définie par l'alignement de la deuxième ouverture d'obturateur (32) avec la deuxième ouverture de corps (22).

2. Groupe vanne (1) selon la revendication 1, dans lequel, dans la position de base, la section hydraulique définie par l'alignement de la deuxième ouverture d'obturateur (32) avec la deuxième ouverture de corps (22) est sensiblement nulle, puisque la deuxième ouverture d'obturateur (32) et deuxième ouverture de corps (22) sont sensiblement désalignées, et dans lequel, dans la position de réglage, la section de passage hydraulique définie par l'alignement de la première ouverture d'obturateur (31) avec la première ouverture de corps (21) est sensiblement nulle, la première ouverture d'obturateur (31) et la première ouverture de corps (21) étant sensiblement désalignées.

3. Groupe vanne (1) selon l'une quelconque des revendications précédentes, dans lequel chaque ouverture de conduit (81, 82), chaque ouverture de corps (21, 22) et chaque ouverture d'obturateur (31, 32) se compose d'une pluralité de passages de fluide axialement espacés entre eux, de préférence chaque passage de fluide s'étend sur une section circonférentielle par rapport à l'axe de conduit (C-C) et à l'axe (X-X).

4. Groupe vanne (1) selon l'une quelconque des revendications précédentes, dans lequel le corps de vanne (2) comprend une pluralité de fentes de guidage (26), de préférence deux fentes de guidage (26), de préférence trois fentes de guidage (26), espacées angulairement de manière égale, s'étendant axialement par rapport à l'axe (X-X), dans lequel l'obturateur (3) comprend une pluralité d'éléments de guidage (36) s'étendant radialement à travers chaque fente de guidage (26).

5. Groupe vanne (1) selon la revendication 4, dans lequel les éléments de guidage (36) s'étendent radialement en s'engageant mutuellement, par exemple à l'intérieur de la cavité de corps (200), dans une portion centrale de l'obturateur (360).

6. Groupe vanne (1) selon l'une quelconque des revendications précédentes, dans lequel ladite au moins une fente de guidage (26) s'étend, par rapport à l'axe (X-X), de manière linéaire parallèle audit axe, de sorte qu'une action du dispositif de commande (4) corresponde à une translation axiale de l'obturateur (3).

7. Groupe vanne (1) selon l'une quelconque des revendications précédentes, dans lequel le dispositif de commande (4) comprend un organe de commande (40) engagé avec le corps de vanne (2) et l'obturateur (3), dans lequel l'organe de commande (40) est activable en fonction des conditions de fonctionnement de l'huile, de manière à guider l'obturateur (3) en position de base ou en position de réglage.

8. Groupe vanne (1) selon la revendication 7, dans lequel l'organe de commande (40) est du type sensible à la température, comprenant par exemple un élément de cire (400), dans lequel l'organe de commande (40) est logé dans la cavité de corps (200), en prise avec la deuxième extrémité (25) et ledit au moins un élément de guidage (36).

9. Groupe vanne (1) selon la revendication 7, dans lequel l'organe de commande (40) comprend un actionneur de commande électrique (410) et une tige de commande (415) déplacée axialement par l'actionneur de commande électrique (410), lequel actionneur de commande électrique (410) est logé au niveau de la deuxième extrémité (25) et la tige de commande (415) est en prise avec ledit au moins un élément de guidage (36).

10. Groupe vanne (1) selon la revendication 9, dans lequel l'actionneur de commande électrique (410) est logé au niveau de la deuxième extrémité (25) à l'extérieur de la cavité de corps (200)

11. Groupe vanne (1) selon l'une quelconque des revendications 9 ou 10, dans lequel, en cas de rupture et/ou de dysfonctionnement de l'actionneur de commande électrique (410), l'obturateur (3) est positionnable dans une position de sécurité dans laquelle la première ouverture d'obturateur (31) et la première ouverture de corps (21) sont au moins partiellement alignées, et la deuxième ouverture d'obturateur (32) et la deuxième ouverture de corps (22) sont au moins partiellement alignées.

12. Groupe vanne (1) selon la revendication 7, dans lequel l'organe de commande (40) comprend un élément à mémoire de forme (420), engagé à une extrémité avec le corps de vanne (2) et à l'autre extrémité avec l'obturateur (3).

13. Groupe vanne (1) selon la revendication 12, dans lequel l'élément à mémoire de forme (420) s'étend le long de l'axe (X-X), monté sur le corps de vanne (2), de manière à être, dans une configuration du groupe vanne (1) logé dans le conduit (8), positionné radialement entre le corps de vanne (2) et les parois latérales du conduit (80), en prise avec la deuxième extrémité (25) d'un côté et un premier bord d'obturateur (38) de l'autre côté.

14. Groupe vanne (1) selon la revendication 13, dans lequel l'élément à mémoire de forme (420) est un ressort hélicoïdal.

15. Groupe vanne (1) selon l'une quelconque des revendications 7 à 14, dans lequel le dispositif de commande (4) comprend un organe de rappel (45) adapté à exercer une action sur l'obturateur (3) opposée à celle de l'organe de commande (40), de manière à ramener l'obturateur (3) en position de base.

16. Groupe vanne (1) selon la revendication 15 en combinaison avec la revendication 11, dans lequel l'organe de rappel (45) est adapté à exercer une action sur l'obturateur (3) opposée à celle de l'organe de commande (40), de manière à ramener l'obturateur (3) en position de sécurité.

17. Un ensemble de gestion d'huile (900) d'un circuit d'huile sous pression d'un véhicule, en communication fluide avec un groupe opérateur de véhicule, par exemple un ensemble moteur ou un ensemble de transmission, comprenant :
i) un groupe échangeur de chaleur (920) ;
ii) un ensemble support (980) comprenant au moins un conduit (8) s'étendant le long d'un axe de conduit (C-C), comprenant des parois latérales de conduit (80) sur lesquelles il comprend une première ouverture de conduit (81) et une deuxième ouverture de conduit (82) pour la connexion fluide avec le groupe opérateur et ledit groupe échangeur de chaleur (920), respectivement ;
iii) un groupe vanne (1) logeable dans ledit conduit (8), selon l'une quelconque des revendications 1 à 16.

18. Ensemble de gestion d'huile (900) d'un véhicule, selon la revendication 17, qui est connectable en fluide à un groupe opérateur de véhicule, tel qu'un ensemble boîte de vitesses ou un ensemble moteur, comprenant :
iv) un groupe de filtration d'huile (910) supporté et connecté en fluide à l'ensemble support (980) au moyen du conduit (8), dans lequel la première ouverture de conduit (81) est connectée en fluide audit ensemble de filtration d'huile (910).
